# EUROPEAN PATENT APPLICATION

(11) **EP 4 400 346 A1**
(43) Date of publication of application: **17.07.2024**
(21) Application number: 24150823.3
(22) Date of filing: 09.01.2024
(51) Int. Cl.: B60K 1/00, B60K 6/20

(54) **ELECTRIFIED VEHICLE**

(30) Priority: 12.01.2023 JP 2023003375
(71) Applicant: TOYOTA JIDOSHA KABUSHIKI KAISHA, Toyota-shi, Aichi-ken, 471-8571 (JP)
(72) Inventor: ISHIBASHI, Masayuki, Aichi-ken, 471-8571 (JP)
(74) Representative: D Young & Co LLP

(57) **Abstract**

An electrified vehicle including a battery for drive, a charger, an electric motor, a transfer device, and a power control circuit is provided. A drive device including the electric motor, the transfer device, and a differential device and the power control circuit are housed in the same case as an integrated electromechanical unit. When mounted on the vehicle, rotational axes of components of the drive device are positioned such that the transfer device, the differential device, and the electric motor are arranged in this order in the forward-rearward travel direction. When mounted on the vehicle, a vertically lower portion of the power control circuit is disposed at a position overlapping a vertically upper portion of the electric motor as seen in the forward-rearward travel direction. A space is created vertically above the integrated electromechanical unit. When mounted on the vehicle, the charger is disposed vertically above the integrated electromechanical unit.

## Description

### BACKGROUND OF THE INVENTION

### 1. Field of the Invention

The present invention relates to an electrified vehicle equipped with a charger.

### 2. Description of Related Art

There are well-known electrified vehicles including a battery for drive, a charger that charges the battery using power supplied from an external power source, an electric motor that functions as a power source, and a power control circuit that controls power exchanged between the battery and the electric motor. Examples of such electrified vehicles include a hybrid electric vehicle described in Japanese Unexamined Patent Application Publication No. 2017-144819 (JP 2017-144819 A). JP 2017-144819 A discloses a hybrid electric vehicle including a battery mounted in rear of a rear seat, in which a space in rear of the battery is vertically divided by a floor plate of a luggage compartment and a charger is mounted below the floor plate.

### SUMMARY OF THE INVENTION

In the vehicle according to JP 2017-144819 A, the charger is disposed in a space secured by dividing the luggage compartment of the vehicle separately from an engine compartment, in order to avoid an increase in the size of the engine compartment to impose a constraint on the vehicle design. Therefore, the luggage compartment of the vehicle may be reduced in the vehicle according to JP 2017-144819 A. There is room for improvement regarding the arrangement of the charger.

The present invention provides an electrified vehicle that allows a charger to be mounted while avoiding an increase in the size of a power source chamber and a reduction in the size of a luggage compartment.

An aspect of the present invention relates to an electrified vehicle including a battery for drive, a charger, an electric motor, a transfer device, a differential device, and a power control circuit. The charger is configured to charge the battery using power supplied from an external power source. The electric motor is configured to function as a power source. The transfer device is configured to transfer power from the electric motor. The differential device is configured to distribute the power transferred via the transfer device to wheels on right and left sides with respect to a forward-rearward travel direction. The power control circuit is configured to control power exchanged between the battery and the electric motor. A drive device that includes the electric motor, the transfer device, and the differential device and the power control circuit are housed in an identical case as an integrated electromechanical unit. With the drive device mounted on the electrified vehicle, a rotational axis of the electric motor, a rotational axis of the transfer device, and a rotational axis of the differential device are disposed in parallel with a horizontal direction that is perpendicular to the forward-rearward travel direction of the electrified vehicle, and the respective rotational axes are positioned such that the electric motor, the transfer device, and the differential device are arranged in this order from an upper side toward a lower side in a vertical direction and such that the transfer device, the differential device, and the electric motor are arranged in this order in the forward-rearward travel direction. With the power control circuit mounted on the electrified vehicle, the power control circuit is disposed vertically above the drive device, and a vertically lower portion of the power control circuit is disposed at a position overlapping a vertically upper portion of the electric motor as seen in the forward-rearward travel direction. With the charger mounted on the electrified vehicle, the charger is disposed vertically above the integrated electromechanical unit.

In the electrified vehicle according to the aspect described above, the drive device including the electric motor etc. and the power control circuit are housed in the same case as an integrated electromechanical unit. With the drive device mounted on the electrified vehicle, the respective rotational axes are positioned such that the electric motor, the transfer device, and the differential device are arranged in this order from the upper side toward the lower side in the vertical direction, and such that the transfer device, the differential device, and the electric motor are arranged in this order in the forward-rearward travel direction. With the power control circuit mounted on the electrified vehicle, the power control circuit is disposed vertically above the drive device, and the vertically lower portion of the power control circuit is disposed at a position overlapping the vertically upper portion of the electric motor as seen in the forward-rearward travel direction. From the above, the physical size of the drive device in the vertical direction can be reduced while appropriately securing the interaxial distance between the rotational axis of the electric motor and the rotational axis of the transfer device. The power control circuit is mounted in a space created by reducing the physical size of the drive device in the vertical direction, and a space is created vertically above the integrated electromechanical unit. With the charger mounted on the electrified vehicle, the charger is disposed vertically above the integrated electromechanical unit. Consequently, the charger can be mounted in the power source chamber that houses the power source without increasing the size of the power source chamber. Hence, the charger can be mounted while avoiding an increase in the size of the power source chamber and a reduction in the size of a luggage compartment.

In the electrified vehicle according to the aspect of the present invention, a charge port to be connected to the external power source may be provided in an outer plate that forms a power source chamber that houses the integrated electromechanical unit and the charger.

In the electrified vehicle configured as described above, a charge port to be connected to the external power source is provided in an outer plate that forms a power source chamber that houses the integrated electromechanical unit and the charger. Thus, an in-vehicle charge cable that connects between the charger and the charge port can be shortened.

The electrified vehicle according to the aspect of the present invention may further include: an engine configured to function as a power source; and an electric transmission mechanism that includes a differential mechanism, to which the engine is coupled so as to be able to transfer power, and a differential electric motor coupled to the differential mechanism so as to be able to transfer power, the electric transmission mechanism being configured such that a differential state of the differential mechanism is controlled by controlling an operation state of the differential electric motor. The electric transmission mechanism may constitute a part of the drive device, and an output rotary member of the electric transmission mechanism may be disposed coaxially with the differential electric motor. The transfer device may be configured to transfer power from the output rotary member of the electric transmission mechanism to the differential device. The power control circuit may be configured to control power exchanged between the battery and the differential electric motor. With the drive device mounted on the electrified vehicle, a rotational axis of the differential electric motor, the rotational axis of the electric motor, the rotational axis of the transfer device, and the rotational axis of the differential device may be disposed in parallel with the horizontal direction that is perpendicular to the forward-rearward travel direction, and the respective rotational axes may be positioned such that the electric motor, the transfer device, the differential electric motor, and the differential device are arranged in this order from the upper side toward the lower side in the vertical direction and such that the differential electric motor, the transfer device, the differential device, and the electric motor are arranged in this order in the forward-rearward travel direction.

In the electrified vehicle configured as described above, with the drive device mounted on the electrified vehicle, the respective rotational axes are positioned such that the electric motor, the transfer device, the differential electric motor, and the differential device are arranged in this order from the upper side toward the lower side in the vertical direction, and such that the differential electric motor, the transfer device, the differential device, and the electric motor are arranged in this order in the forward-rearward travel direction. Consequently, the physical size of the drive device in the vertical direction can be reduced while appropriately securing the interaxial distance between the rotational axis of the electric motor and the rotational axis of the transfer device and the interaxial distance between the rotational axis of the differential electric motor and the rotational axis of the transfer device.

In the electrified vehicle configured as described above, with the power control circuit mounted on the electrified vehicle, the vertically lower portion of the power control circuit may be disposed vertically above the differential electric motor.

In the electrified vehicle configured as described above, with the power control circuit mounted on the electrified vehicle, the vertically lower portion of the power control circuit is disposed vertically above the differential electric motor. Consequently, the physical size of the drive device in the vertical direction can be reduced while appropriately securing the interaxial distance between the rotational axis of the electric motor and the rotational axis of the transfer device and the interaxial distance between the rotational axis of the differential electric motor and the rotational axis of the transfer device.

In the electrified vehicle configured as described above, the power control circuit may include a voltage boosting converter and an inverter. The voltage boosting converter is configured to include a reactor and a switching element and boost a voltage of direct current power from the battery, and the inverter is configured to convert the direct current power from the voltage boosting converter into alternating current power and supply the alternating current power to the electric motor. The vertically lower portion of the power control circuit may include the reactor.

In the electrified vehicle configured as described above, the vertically lower portion of the power control circuit includes the reactor. Consequently, the reactor that is relatively short can be disposed in an extra space that is relatively short in length in the forward-rearward travel direction and that is formed by the arrangement of the differential electric motor and the electric motor.

The electrified vehicle according to the aspect of the present invention may further include: an engine configured to function as a power source; and a power supply electric motor coupled to the engine so as to be able to transfer power. The power supply electric motor may be disposed coaxially with the electric motor.

In the electrified vehicle configured as described above, the power supply electric motor coupled to the engine so as to be able to transfer power is disposed coaxially with the electric motor. A reduction in the size of the integrated electromechanical unit including the power supply electric motor can be expected.

The electrified vehicle according to the aspect of the present invention may further include: an engine configured to function as a power source; and a power supply electric motor coupled to the engine so as to be able to transfer power. The power supply electric motor may be disposed on an axis that is different from an axis of the electric motor.

In the electrified vehicle configured as described above, the power supply electric motor coupled to the engine so as to be able to transfer power is disposed on an axis that is different from the axis of the electric motor. A reduction in the size of the integrated electromechanical unit including the power supply electric motor can be expected.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates an example of a schematic configuration of an electrified vehicle according to a first embodiment of the present invention;
FIG. 2 illustrates an example of the electric configuration of an electric circuit unit etc. included in an integrated electromechanical unit mounted on the electrified vehicle;
FIG. 3 illustrates an example of a schematic configuration of the integrated electromechanical unit;
FIG. 4 illustrates an example of the arrangement positions of constituent members of a drive device included in the integrated electromechanical unit;
FIG. 5 illustrates an example of a state in which the integrated electromechanical unit and an alternating current (AC) charger are mounted on the electrified vehicle;
FIG. 6 illustrates an example of a schematic configuration of an electrified vehicle according to a second embodiment of the present invention;
FIG. 7 illustrates an example of the arrangement positions of constituent members of a drive device of the electrified vehicle according to the second embodiment illustrated in FIG. 6;
FIG. 8 illustrates an example of a schematic configuration of an electrified vehicle according to a third embodiment of the present invention; and
FIG. 9 illustrates an example of the arrangement positions of constituent members of a drive device of the electrified vehicle according to the third embodiment illustrated in FIG. 8.

### DETAILED DESCRIPTION OF EMBODIMENTS

Embodiments of the present invention will be described in detail below with reference to the drawings.

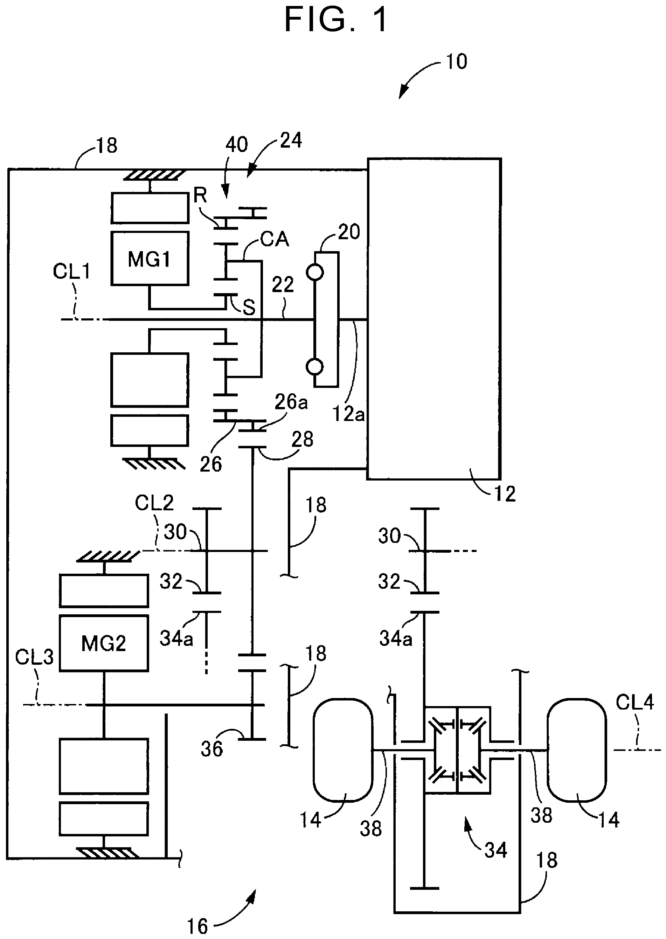

First, an electrified vehicle according to a first embodiment of the present invention will be described. FIG. 1 illustrates an example of a schematic configuration of an electrified vehicle 10 according to the first embodiment. In FIG. 1, the electrified vehicle 10 is a hybrid electric vehicle that includes an engine 12 that functions as a power source and a second electric motor MG2 that is an electric motor that functions as a power source. The electrified vehicle 10 also includes drive wheels 14, a power transfer device 16, and a first electric motor MG1.

The engine 12 is a known internal combustion engine. The drive wheels 14 are wheels on the right and left sides with respect to the forward-rearward travel direction of the electrified vehicle 10. The power transfer device 16 is provided in a power transfer path between the engine 12 and the drive wheels 14 and a power transfer path between the second electric motor MG2 and the drive wheels 14.

The first electric motor MG1 and the second electric motor MG2 are known rotary electric machines that have a function as a motor that generates mechanical power from electric power and a function as an electric generator that generates electric power from mechanical power, and are so-called motor generators. The first electric motor MG1 and the second electric motor MG2 are provided in a non-rotatable case 18 that is a non-rotary member attached to a vehicle body.

The power transfer device 16 includes, in the case 18, a damper 20, an input shaft 22, a speed change portion 24, a combined gear 26, a driven gear 28, a driven shaft 30, a final gear 32, a differential gear 34, a reduction gear 36, etc. The input shaft 22 functions as an input rotary member of the speed change portion 24, and is coupled to a crankshaft 12a of the engine 12 via the damper 20 etc. The speed change portion 24 is coupled to the input shaft 22. The combined gear 26 is a rotary body on the output side of the speed change portion 24. A drive gear 26a is formed on a part of the outer peripheral surface of the combined gear 26. The drive gear 26a is an output rotary member of the speed change portion 24. The driven gear 28 is meshed with the drive gear 26a. The driven gear 28 and the final gear 32 are fixed to the driven shaft 30 so as not to be rotatable relative to each other. The final gear 32 is smaller in diameter than the driven gear 28, and is meshed with a differential ring gear 34a of the differential gear 34. The reduction gear 36 is smaller in diameter than the driven gear 28, and is meshed with the driven gear 28. A rotor shaft of the second electric motor MG2 is coupled to the reduction gear 36, and the second electric motor MG2 is coupled to the reduction gear 36 so as to be able to transfer power. The power transfer device 16 also includes a pair of drive shafts 38 etc. coupled to the differential gear 34.

The thus configured power transfer device 16 is suitably used for vehicles of a front-engine front-drive (FF) type or a rear-engine rear-drive (RR) type. The power transfer device 16 transfers power output from the engine 12 to the driven gear 28 via the speed change portion 24. In addition, the power transfer device 16 transfers power output from the second electric motor MG2 to the driven gear 28 via the reduction gear 36. The power transfer device 16 transfers the power transferred to the driven gear 28 to the drive wheels 14 sequentially via the driven shaft 30, the final gear 32, the differential gear 34, the drive shafts 38, etc. The driven gear 28, the driven shaft 30, and the final gear 32 are a transfer device that transfers power from the second electric motor MG2 to the differential gear 34, and are a transfer device that transfers power from the drive gear 26a to the differential gear 34. The differential gear 34 is a differential device that distributes the power transferred via the driven gear 28, the driven shaft 30, and the final gear 32 to the drive wheels 14.

The power transfer device 16 has a first axis CL1, a second axis CL2, a third axis CL3, and a fourth axis CL4. The four axes CL1, CL2, CL3, and CL4 are parallel to each other. The first axis CL1 is the axis of the input shaft 22, and is the axis of a rotor shaft of the first electric motor MG1. That is, the first axis CL1 is the rotational axis of the first electric motor MG1. The speed change portion 24 and the first electric motor MG1 are disposed about the first axis CL1. That is, the drive gear 26a of the speed change portion 24 is disposed coaxially with the first electric motor MG1. The second axis CL2 is the axis of the driven shaft 30. The driven gear 28 and the final gear 32 are disposed about the second axis CL2. That is, the second axis CL2 is the rotational axis of the driven gear 28, the driven shaft 30, and the final gear 32. The third axis CL3 is the axis of the rotor shaft of the second electric motor MG2. That is, the third axis CL3 is the rotational axis of the second electric motor MG2. The second electric motor MG2 and the reduction gear 36 are disposed about the third axis CL3. The fourth axis CL4 is the axis of the drive shafts 38, and is the axis of the differential gear 34. That is, the fourth axis CL4 is the rotational axis of the differential gear 34. The differential gear 34 is disposed about the fourth axis CL4.

The speed change portion 24 includes the first electric motor MG1 and a differential mechanism 40. The differential mechanism 40 is constituted of a known planetary gear device of a single pinion type, and includes a sun gear S, a carrier CA, and a ring gear R. The sun gear S is coupled to the rotor shaft of the first electric motor MG1, and the first electric motor MG1 is coupled to the sun gear S so as to be able to transfer power. The carrier CA is coupled to the input shaft 22, and the engine 12 is coupled to the carrier CA via the input shaft 22 etc. so as to be able to transfer power. The ring gear R is formed on a part of the inner peripheral surface of the combined gear 26, and integrally coupled to the drive gear 26a.

The differential mechanism 40 is a differential mechanism that produces a differential action with the engine 12 coupled to the differential mechanism 40 so as to be able to transfer power. The first electric motor MG1 is a differential electric motor coupled to the differential mechanism 40 so as to be able to transfer power. The differential mechanism 40 is a power split mechanism that mechanically splits and distributes power of the engine 12 input to the carrier CA to the first electric motor MG1 and the drive gear 26a. The speed change portion 24 is a known electric transmission mechanism configured such that the differential state of the differential mechanism 40 is controlled by controlling the operation state of the first electric motor MG1.

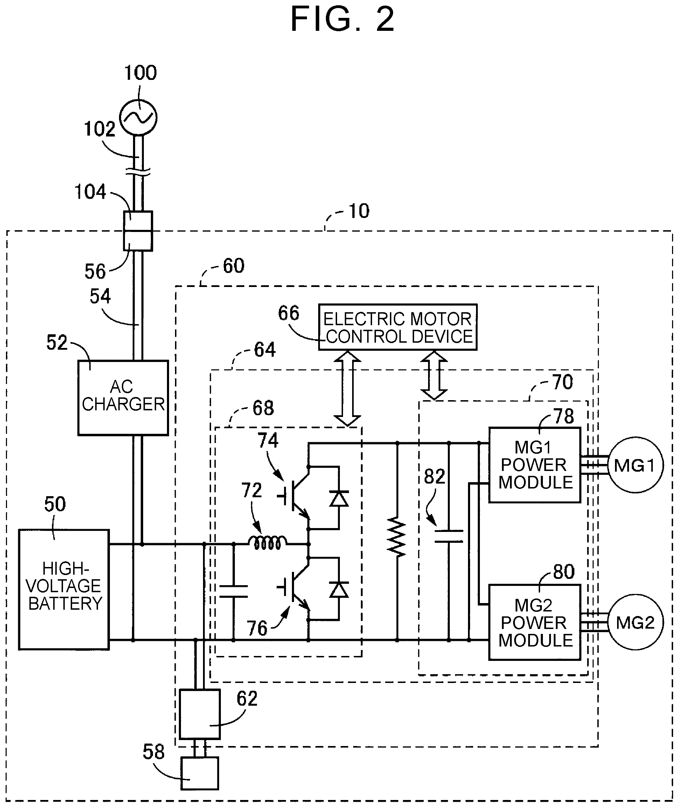

FIG. 2 illustrates an example of the electric configuration of an electric circuit unit 60 etc. In FIG. 2, the electrified vehicle 10 further includes a high-voltage battery 50, an alternating current (AC) charger 52, an in-vehicle charge cable 54, a charge inlet 56, an auxiliary battery 58, the electric circuit unit 60, etc.

The high-voltage battery 50 is a direct current (DC) power source that is chargeable and dischargeable, and is a secondary battery such as a nickel metal hydride secondary battery or a lithium ion battery, for example. The high-voltage battery 50 is connected to the electric circuit unit 60, and connected to the AC charger 52. The AC charger 52 is connected to the charge inlet 56 via the in-vehicle charge cable 54. The charge inlet 56 is provided in the vehicle body so as to be connectable to a charge connector 104 of an external charge cable 102 connected to an external power source 100 that is external to the electrified vehicle 10. The charge inlet 56 is a terminal to be connected to the charge connector 104 to receive power supplied from the external power source 100. The charge inlet 56 is a charge port to be connected to the external power source 100.

The AC charger 52 is a charger that charges the high-voltage battery 50 using power supplied from the external power source 100. The AC charger 52 converts an AC current supplied from the external power source 100 into a DC current, and charges the high-voltage battery 50 by boosting the voltage of the external power source 100 to a voltage that is equivalent to the voltage of the high-voltage battery 50.

Power stored in the high-voltage battery 50 is supplied to the second electric motor MG2, for example, via the electric circuit unit 60. Meanwhile, the high-voltage battery 50 is supplied with power generated by the first electric motor MG1 and power regenerated by the second electric motor MG2 via the electric circuit unit 60. When the charge connector 104 connected to the external power source 100 is connected to the charge inlet 56, power from the external power source 100 is supplied to the high-voltage battery 50 via the AC charger 52 etc. The electrified vehicle 10 is a so-called plug-in hybrid electric vehicle in which the high-voltage battery 50 is chargeable with power from the external power source 100. The high-voltage battery 50 is a battery for drive.

The electric circuit unit 60 includes a direct current-direct current (DC-DC) converter 62, a power control circuit 64, an electric motor control device 66, etc.

The DC-DC converter 62 is connected to the high-voltage battery 50. The DC-DC converter 62 functions as a charge device that charges the auxiliary battery 58 by lowering the voltage of the high-voltage battery 50 to a voltage that is equivalent to the voltage of the auxiliary battery 58. The auxiliary battery 58 supplies power for actuating auxiliaries provided in the electrified vehicle 10. The auxiliary battery 58 supplies power for actuating electronic control devices such as the electric motor control device 66 provided in the electrified vehicle 10.

The power control circuit 64 includes a voltage boosting converter 68, an inverter 70, etc. The power control circuit 64 controls power exchanged between the high-voltage battery 50 and each of the first electric motor MG1 and the second electric motor MG2. The voltage boosting converter 68 includes a reactor 72, two switching elements 74 and 76, etc. The inverter 70 includes an MG1 power module 78, an MG2 power module 80, a capacitor 82, etc. The MG1 power module 78 and the MG2 power module 80 each include switching elements that are similar to the switching elements 74 and 76, etc.

The voltage boosting converter 68 is a voltage boosting/lowering circuit that has a function to boost the voltage of the high-voltage battery 50 and supply the voltage to the inverter 70 and a function to lower a DC voltage converted by the inverter 70 and supply the voltage to the high-voltage battery 50. In this manner, the voltage boosting converter 68 boosts the voltage of DC power from the high-voltage battery 50.

The inverter 70 converts a DC current from the voltage boosting converter 68 into an AC current for driving the first electric motor MG1 and the second electric motor MG2. In this manner, the inverter 70 converts DC power from the voltage boosting converter 68 into AC power, and supplies the AC power to the first electric motor MG1 and the second electric motor MG2. The inverter 70 coverts, into a DC current, an AC current generated by the first electric motor MG1 using power of the engine 12 and an AC current generated by the second electric motor MG2 through regenerative braking. The inverter 70 supplies the AC current generated by the first electric motor MG1 as power for driving the second electric motor MG2 in accordance with the travel state.

The electric motor control device 66 controls the voltage boosting converter 68 and the inverter 70. For example, the electric motor control device 66 converts a DC current from the high-voltage battery 50 into an AC current to be used by the first electric motor MG1 and the second electric motor MG2. The electric motor control device 66 drives the first electric motor MG1 in order to secure the amount of power needed to supply power to the second electric motor MG2 or charge the high-voltage battery 50. The electric motor control device 66 drives the second electric motor MG2 based on an output request value that matches torque requested by a driver. The electric motor control device 66 causes the second electric motor MG2 to function as an electric generator in accordance with the required amount of regenerative braking.

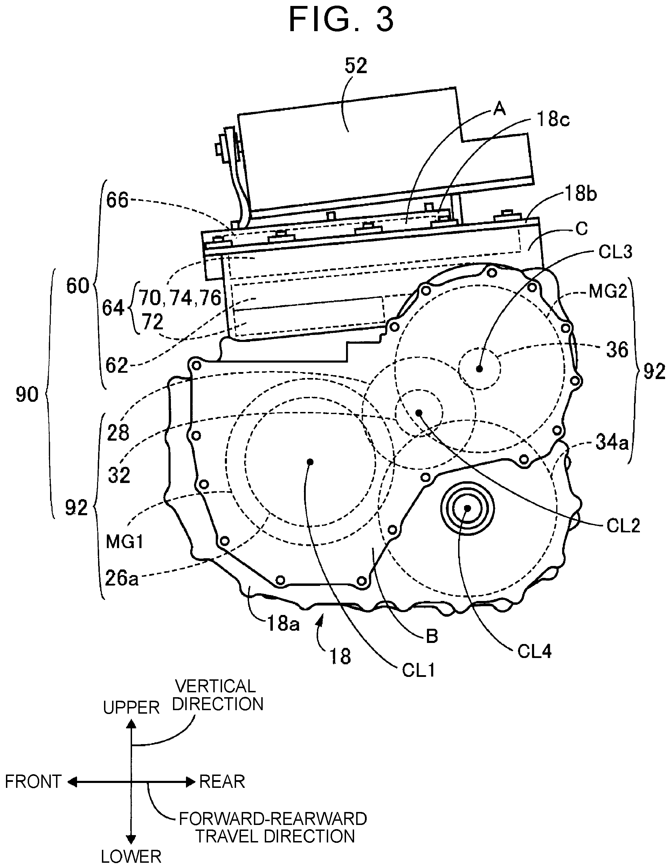

FIG. 3 illustrates an example of a schematic configuration of an integrated electromechanical unit 90. In FIG. 3, in the electrified vehicle 10, a drive device 92 and the electric circuit unit 60 are housed in the same case 18 as the integrated electromechanical unit 90.

The case 18 includes a body 18a, a cover plate 18b, and a protection cover 18c, for example. The body 18a includes a bottom wall and a side wall that extends upward in the vertical direction from the outer peripheral edge of the bottom wall, and opens upward in the vertical direction. The cover plate 18b is a plate-like member that closes an opening of the body 18a. The protection cover 18c is provided on the upper surface of the cover plate 18b in the vertical direction, and forms a predetermined space A with the upper surface of the cover plate 18b. The body 18a has a partition wall (not illustrated) that divides the inside of the body 18a into two spaces, namely a vertically lower space B and a vertically upper space C. The vertical direction and the forward-rearward travel direction in the drawings are defined with the relevant component mounted on the electrified vehicle 10.

The drive device 92 includes the power transfer device 16 (28, 32, 34, etc.), the first electric motor MG1, and the second electric motor MG2. The speed change portion 24 constitutes a part of the drive device 92. With the drive device 92 mounted on the electrified vehicle 10, the drive device 92 is housed in the vertically lower space B in the body 18a.

When mounted on the electrified vehicle 10, the DC-DC converter 62 and the power control circuit 64 of the electric circuit unit 60 are housed in the vertically upper space C in the body 18a.

The vertically upper space C includes an extra space formed by the arrangement of the first electric motor MG1 and the second electric motor MG2 and a space vertically above the second electric motor MG2. The extra space is shorter in length in the forward-rearward travel direction than the space vertically above the second electric motor MG2. Therefore, the reactor 72 that is relatively short among the components of the DC-DC converter 62 and the power control circuit 64 is housed in the lower part of the extra space. Meanwhile, the DC-DC converter 62 is housed in the upper part of the extra space in consideration of the ease of replacement. The inverter 70 and the switching elements 74 and 76, among the components of the power control circuit 64, are housed in the space vertically above the second electric motor MG2.

When mounted on the electrified vehicle 10, the electric motor control device 66, among the components of the electric circuit unit 60, is housed in the predetermined space A formed vertically above by the protection cover 18c. In the electrified vehicle 10, it is not necessary that the predetermined space A should be formed by the protection cover 18c, and the electric motor control device 66 may be housed in the vertically upper space C.

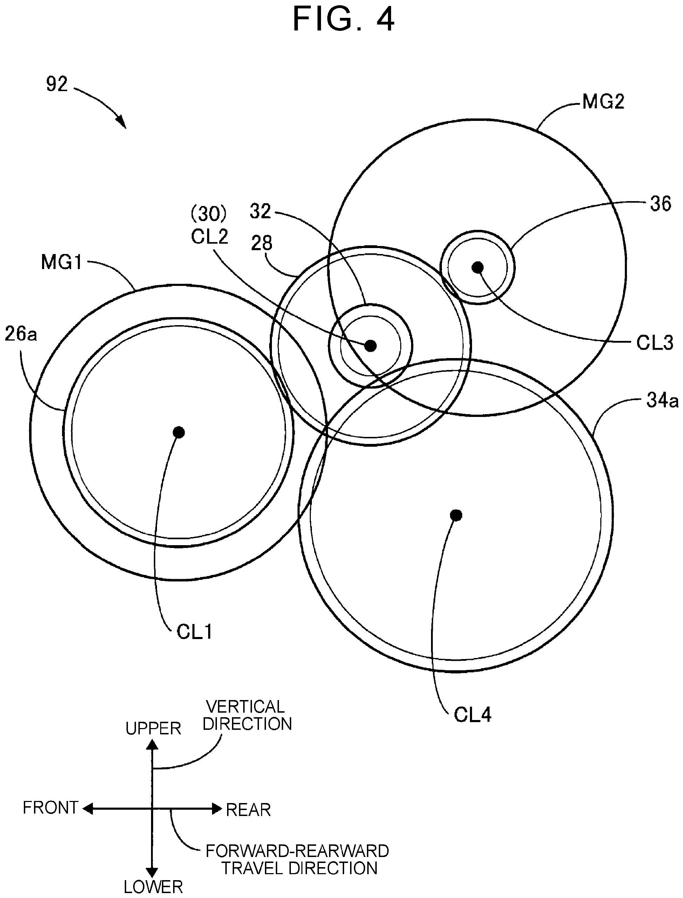

FIG. 4 illustrates an example of the arrangement positions of constituent members of the drive device 92. In FIG. 4, with the drive device 92 mounted on the electrified vehicle 10, the first axis CL1, the second axis CL2, the third axis CL3, and the fourth axis CL4 are disposed in parallel with a horizontal direction that is perpendicular to the forward-rearward travel direction of the electrified vehicle 10. With the drive device 92 mounted on the electrified vehicle 10, in addition, the first axis CL1, the second axis CL2, the third axis CL3, and the fourth axis CL4 are positioned such that the second electric motor MG2, the driven shaft 30, the first electric motor MG1, and the differential gear 34 are arranged in this order from the upper side toward the lower side in the vertical direction, and such that the first electric motor MG1, the driven shaft 30, the differential gear 34, and the second electric motor MG2 are arranged in this order from the front side toward the rear side in the forward-rearward travel direction. Consequently, the physical size of the drive device 92 in the vertical direction can be reduced while appropriately securing the interaxial distances among the first axis CL1, the second axis CL2, the third axis CL3, and the fourth axis CL4. Hence, an extra space is created by the arrangement of the first electric motor MG1 and the second electric motor MG2, and a space is created vertically above the second electric motor MG2 (see the vertically upper space C in FIG. 3). The electric circuit unit 60 is mounted in the space C (see FIG. 3).

With reference to FIG. 3, with the power control circuit 64 mounted on the electrified vehicle 10, the power control circuit 64 is disposed vertically above the drive device 92, and the vertically lower portion of the power control circuit 64 is disposed at a position overlapping the vertically upper portion of the second electric motor MG2 as seen in the forward-rearward travel direction. When seen differently, with the power control circuit 64 mounted on the electrified vehicle 10, the vertically lower portion of the power control circuit 64 is disposed vertically above the first electric motor MG1. In addition, the vertically lower portion of the power control circuit 64 includes the reactor 72.

The electric circuit unit 60 is mounted in a space created by reducing the physical size of the drive device 92 in the vertical direction, and a space is created vertically above the integrated electromechanical unit 90. As illustrated in FIG. 3, with the AC charger 52 disposed on the electrified vehicle 10, the AC charger 52 is disposed vertically above the integrated electromechanical unit 90.

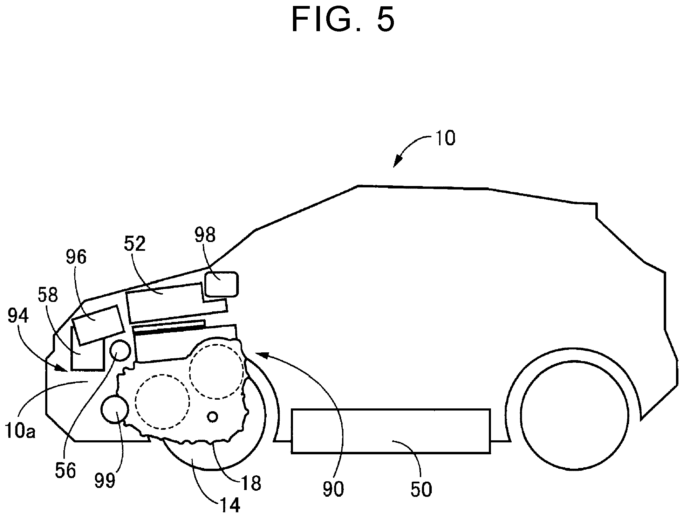

FIG. 5 illustrates an example of a state in which the integrated electromechanical unit 90 and the AC charger 52 are mounted on the electrified vehicle 10. In FIG. 5, the integrated electromechanical unit 90 and the AC charger 52 are housed in an engine compartment 94. The engine compartment 94 is a power source chamber that houses a power source. The auxiliary battery 58, an air cleaner 96, a reservoir tank 98, a water pump 99, etc. are also housed in the engine compartment 94. The high-voltage battery 50 is disposed under the cabin space of the electrified vehicle 10. The electrified vehicle 10 includes the charge inlet 56 in an outer plate 10a that forms the engine compartment 94.

In the first embodiment, as discussed above, the drive device 92 and the power control circuit 64 are housed in the same case as the integrated electromechanical unit 90. With the drive device 92 mounted on the electrified vehicle 10, the respective rotational axes are positioned such that the second electric motor MG2, the driven shaft 30, the first electric motor MG1, and the differential gear 34 are arranged in this order from the upper side toward the lower side in the vertical direction, and such that the first electric motor MG1, the driven shaft 30, the differential gear 34, and the second electric motor MG2 are arranged in this order in the forward-rearward travel direction. With the power control circuit 64 mounted on the electrified vehicle 10, the power control circuit 64 is disposed vertically above the drive device 92, and the vertically lower portion of the power control circuit 64 is disposed at a position overlapping the vertically upper portion of the second electric motor MG2 as seen in the forward-rearward travel direction. When seen differently, with the power control circuit 64 mounted on the electrified vehicle 10, the vertically lower portion of the power control circuit 64 is disposed vertically above the first electric motor MG1. From the above, the physical size of the drive device 92 in the vertical direction can be reduced while appropriately securing the interaxial distance between the third axis CL3 and the second axis CL2 and the interaxial distance between the first axis CL1 and the second axis CL2. The power control circuit 64 is mounted in a space created by reducing the physical size of the drive device 92 in the vertical direction, and a space is created vertically above the integrated electromechanical unit 90. With the AC charger 52 mounted on the electrified vehicle 10, the AC charger 52 is disposed vertically above the integrated electromechanical unit 90. Consequently, the AC charger 52 can be mounted in the engine compartment 94 without increasing the size of the engine compartment 94. Hence, the AC charger 52 can be mounted while avoiding an increase in the size of the engine compartment 94 and a reduction in the size of a luggage compartment.

In the first embodiment, the charge inlet 56 is provided in the outer plate 10a that forms the engine compartment 94 that houses the integrated electromechanical unit 90 and the AC charger 52. Thus, the length of the in-vehicle charge cable 54 can be shortened.

In the first embodiment, the reactor 72 is included in the vertically lower portion of the power control circuit 64. Consequently, the reactor 72 that is relatively short can be disposed in an extra space that is relatively short in length in the forward-rearward travel direction and that is formed by the arrangement of the first electric motor MG1 and the second electric motor MG2.

Next, other embodiments of the present invention will be described. In the following description, portions that are common to the embodiments are denoted by like signs, and description thereof will be omitted.

An electrified vehicle according to a second embodiment of the present invention will be described below. In the first embodiment discussed earlier, the electrified vehicle is provided as the electrified vehicle 10 that is a hybrid electric vehicle that includes the engine 12, the first electric motor MG1, and the second electric motor MG2. In the second embodiment, the electrified vehicle is provided as a battery electric vehicle that includes an electric motor.

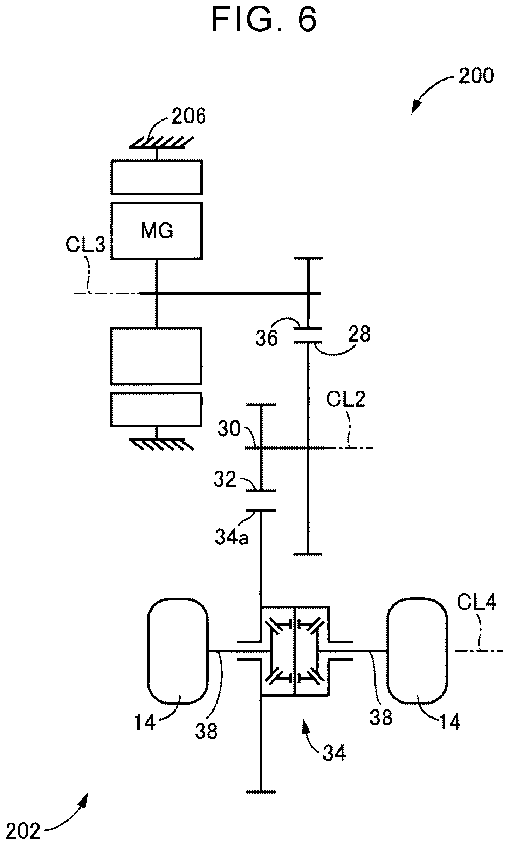

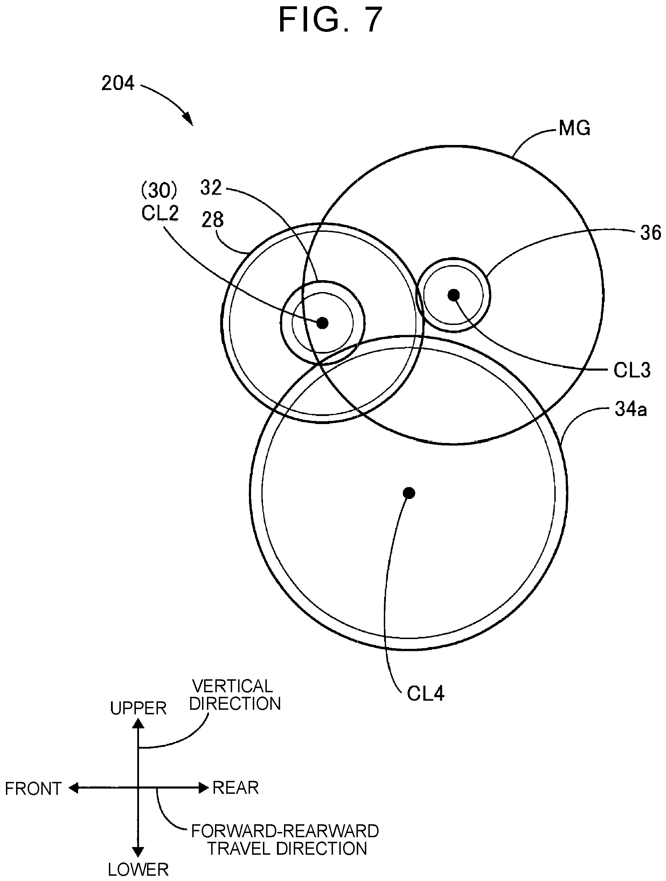

FIG. 6 illustrates an example of a schematic configuration of an electrified vehicle 200 according to the second embodiment of the present invention. In FIG. 6, the electrified vehicle 200 is a battery electric vehicle that includes an electric motor MG that functions as a power source. The electrified vehicle 200 is different from the electrified vehicle 10 according to the first embodiment discussed earlier mainly in not including the engine 12 or the speed change portion 24 including the first electric motor MG1. The electric motor MG of the electrified vehicle 200 corresponds to the second electric motor MG2 of the electrified vehicle 10. As with the electrified vehicle 10, the electrified vehicle 200 further includes a high-voltage battery, an AC charger, an in-vehicle charge cable, a charge inlet, an auxiliary battery, and an electric circuit unit (not illustrated). Thus, in the electrified vehicle 200, as in the electrified vehicle 10, a drive device 204 (see FIG. 7) that includes a power transfer device 202, the electric motor MG, etc. and the electric circuit unit are housed in the same case 206 as an integrated electromechanical unit.

FIG. 7 illustrates an example of the arrangement positions of constituent members of the drive device 204. In FIG. 7, with the drive device 204 mounted on the electrified vehicle 200, the second axis CL2, the third axis CL3, and the fourth axis CL4 are disposed in parallel with a horizontal direction that is perpendicular to the forward-rearward travel direction of the electrified vehicle 200. With the drive device 204 mounted on the electrified vehicle 200, in addition, the second axis CL2, the third axis CL3, and the fourth axis CL4 are positioned such that the electric motor MG, the driven shaft 30, and the differential gear 34 are arranged in this order from the upper side toward the lower side in the vertical direction, and such that the driven shaft 30, the differential gear 34, and the electric motor MG are arranged in this order from the front side toward the rear side in the forward-rearward travel direction. Consequently, the physical size of the drive device 204 in the vertical direction can be reduced while appropriately securing the interaxial distances among the second axis CL2, the third axis CL3, and the fourth axis CL4. Hence, an extra space is created by the arrangement of the electric motor MG, and a space is created vertically above the electric motor MG. The electric circuit unit is mounted in this space.

Although not illustrated, when mounted on the electrified vehicle 200, the power control circuit of the electrified vehicle 200 is disposed vertically above the drive device 204, and the vertically lower portion of the power control circuit is disposed at a position overlapping the vertically upper portion of the electric motor MG as seen in the forward-rearward travel direction, as with the power control circuit 64 of the electrified vehicle 10. The electric circuit unit is mounted in a space created by reducing the physical size of the drive device 204 in the vertical direction, and a space is created vertically above the integrated electromechanical unit. With the AC charger mounted on the electrified vehicle 200, the AC charger is disposed vertically above the integrated electromechanical unit.

With the second embodiment, as discussed above, the AC charger can be mounted while avoiding an increase in the size of the power source chamber or a reduction in the size of a luggage compartment.

An electrified vehicle according to a third embodiment of the present invention will be described below. In the third embodiment, the electrified vehicle is provided as a hybrid electric vehicle that includes two electric motors and that is different from the electrified vehicle 10.

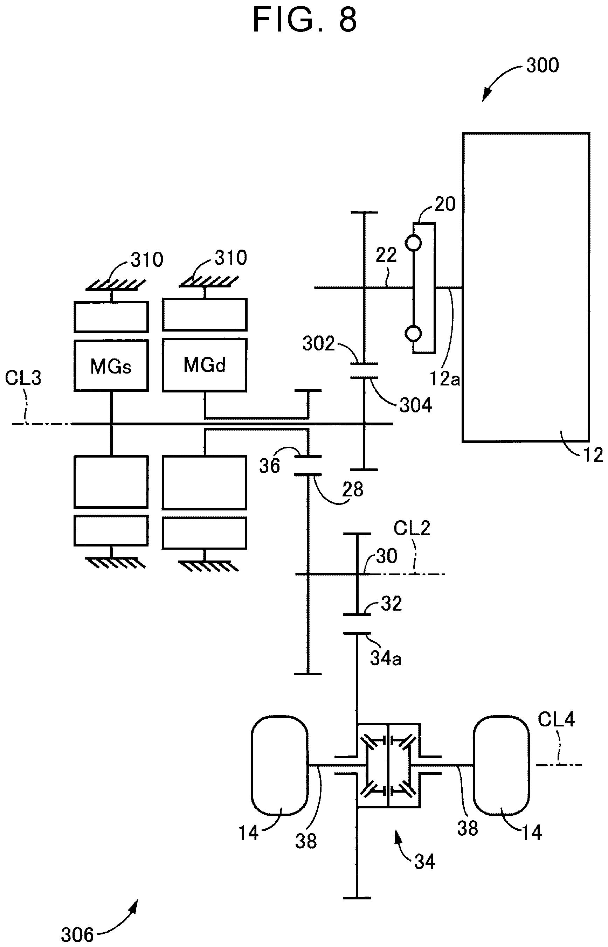

FIG. 8 illustrates an example of a schematic configuration of an electrified vehicle 300 according to the third embodiment of the present invention. In FIG. 8, the electrified vehicle 300 is a series hybrid electric vehicle that includes a drive electric motor MGd that is an electric motor that functions as a power source and a power supply electric motor MGs that is an electric motor coupled to the engine 12 so as to be able to transfer power.

The electrified vehicle 300 is different from the electrified vehicle 10 according to the first embodiment discussed earlier mainly in including the power supply electric motor MGs that is not connected to a power transfer path through which power is transferred to the drive wheels 14 and that generates electricity using power of the engine 12, in place of the speed change portion 24 including the first electric motor MG1. The engine 12 and the power supply electric motor MGs are coupled to each other via a drive gear 302 fixed to the input shaft 22 so as not to be relatively rotatable and a driven gear 304 fixed to a rotor shaft of the power supply electric motor MGs so as not to be relatively rotatable. The rotor shaft of the power supply electric motor MGs penetrates a void in a rotor shaft of the drive electric motor MGd so as to be relatively rotatable. That is, the power supply electric motor MGs is disposed coaxially with the drive electric motor MGd.

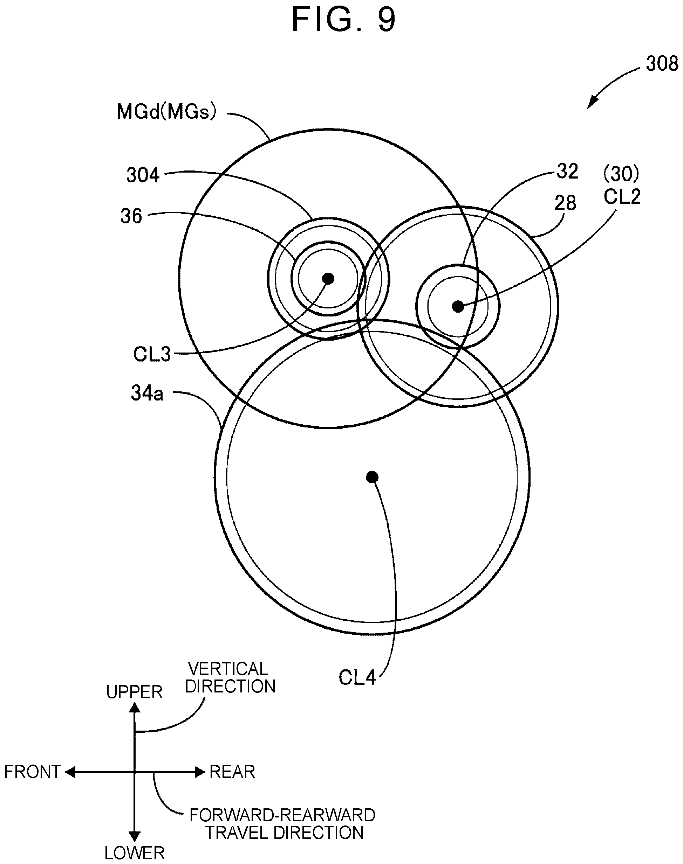

The power supply electric motor MGs of the electrified vehicle 300 corresponds to the first electric motor MG1 of the electrified vehicle 10. The drive electric motor MGd of the electrified vehicle 300 corresponds to the second electric motor MG2 of the electrified vehicle 10. As with the electrified vehicle 10, the electrified vehicle 300 further includes a high-voltage battery, an AC charger, an in-vehicle charge cable, a charge inlet, an auxiliary battery, and an electric circuit unit (not illustrated). Power generated by the power supply electric motor MGs is supplied to the second electric motor MG2 by the electric circuit unit, or charged in the high-voltage battery. In the electrified vehicle 300, as in the electrified vehicle 10, a drive device 308 (see FIG. 9) that includes a power transfer device 306, the power supply electric motor MGs, the drive electric motor MGd, etc. and the electric circuit unit are housed in the same case 310 as an integrated electromechanical unit.

FIG. 9 illustrates an example of the arrangement positions of constituent members of the drive device 308. In FIG. 9, with the drive device 308 mounted on the electrified vehicle 300, the second axis CL2, the third axis CL3, and the fourth axis CL4 are disposed in parallel with a horizontal direction that is perpendicular to the forward-rearward travel direction of the electrified vehicle 300. With the drive device 308 mounted on the electrified vehicle 300, in addition, the second axis CL2, the third axis CL3, and the fourth axis CL4 are positioned such that the drive electric motor MGd, the driven shaft 30, and the differential gear 34 are arranged in this order from the upper side toward the lower side in the vertical direction, and such that the drive electric motor MGd, the differential gear 34, and the driven shaft 30 are arranged in this order from the front side toward the rear side in the forward-rearward travel direction. Consequently, the physical size of the drive device 308 in the vertical direction can be reduced while appropriately securing the interaxial distances among the second axis CL2, the third axis CL3, and the fourth axis CL4. Hence, an extra space is created by the arrangement of the drive electric motor MGd and the power supply electric motor MGs, and a space is created vertically above the drive electric motor MGd. The electric circuit unit is mounted in this space.

Although not illustrated, when mounted on the electrified vehicle 300, the power control circuit of the electrified vehicle 300 is disposed vertically above the drive device 308, and the vertically lower portion of the power control circuit is disposed at a position overlapping the vertically upper portion of the drive electric motor MGd as seen in the forward-rearward travel direction, as with the power control circuit 64 of the electrified vehicle 10. The electric circuit unit is mounted in a space created by reducing the physical size of the drive device 308 in the vertical direction, and a space is created vertically above the integrated electromechanical unit. With the AC charger mounted on the electrified vehicle 300, the AC charger is disposed vertically above the integrated electromechanical unit.

With the third embodiment, as discussed above, the AC charger can be mounted while avoiding an increase in the size of the power source chamber or a reduction in the size of a luggage compartment. In addition, the power supply electric motor MGs is disposed coaxially with the drive electric motor MGd, and thus a reduction in the size of the integrated electromechanical unit including the power supply electric motor MGs can be expected.

While the third embodiment of the present invention has been described in detail above with reference to the drawings, the present invention is also applicable to other aspects.

For example, while the first axis CL1, the second axis CL2, the third axis CL3, and the fourth axis CL4 are positioned such that, with the drive device 92 mounted on the electrified vehicle 10, the first electric motor MG1, the driven shaft 30, the differential gear 34, and the second electric motor MG2 are arranged in this order from the front side toward the rear side in the forward-rearward travel direction in the first embodiment discussed earlier, this aspect is not limiting. For example, the first axis CL1, the second axis CL2, the third axis CL3, and the fourth axis CL4 may be positioned such that, with the drive device 92 mounted on the electrified vehicle 10, the first electric motor MG1, the driven shaft 30, the differential gear 34, and the second electric motor MG2 are arranged in this order from the rear side toward the front side in the forward-rearward travel direction.

In the third embodiment discussed earlier, the electrified vehicle 300 may include a gear provided coaxially with the input shaft 22, coupled to the input shaft 22 via a clutch, and meshed with the reduction gear 36, for example. In the electrified vehicle 300, power of the engine 12 and power of the power supply electric motor MGs can be transferred to the drive wheels 14 by engaging the clutch. In the electrified vehicle 300, the power supply electric motor MGs may be disposed on an axis that is different from the axis of the drive electric motor MGd as illustrated in FIG. 4.

The embodiments discussed above are merely exemplary, and the present invention can be embodied in aspects with a variety of changes and improvements made based on the knowledge of a person skilled in the art.

## Claims

1. An electrified vehicle **characterized by** comprising:
a battery for drive;
a charger configured to charge the battery using power supplied from an external power source;
an electric motor configured to function as a power source;
a transfer device configured to transfer power from the electric motor;
a differential device configured to distribute the power transferred via the transfer device to wheels on right and left sides with respect to a forward-rearward travel direction; and
a power control circuit configured to control power exchanged between the battery and the electric motor, wherein
a drive device that includes the electric motor, the transfer device, and the differential device and the power control circuit are housed in an identical case as an integrated electromechanical unit,
with the drive device mounted on the electrified vehicle, a rotational axis of the electric motor, a rotational axis of the transfer device, and a rotational axis of the differential device are disposed in parallel with a horizontal direction that is perpendicular to the forward-rearward travel direction of the electrified vehicle, and the respective rotational axes are positioned such that the electric motor, the transfer device, and the differential device are arranged in this order from an upper side toward a lower side in a vertical direction and such that the transfer device, the differential device, and the electric motor are arranged in this order in the forward-rearward travel direction,
with the power control circuit mounted on the electrified vehicle, the power control circuit is disposed vertically above the drive device, and a vertically lower portion of the power control circuit is disposed at a position overlapping a vertically upper portion of the electric motor as seen in the forward-rearward travel direction, and
with the charger mounted on the electrified vehicle, the charger is disposed vertically above the integrated electromechanical unit.

2. The electrified vehicle according to claim 1, **characterized in that** a charge port to be connected to the external power source is provided in an outer plate that forms a power source chamber that houses the integrated electromechanical unit and the charger.

3. The electrified vehicle according to claim 1 or 2, **characterized by** further comprising:
an engine configured to function as a power source; and
an electric transmission mechanism that includes a differential mechanism, to which the engine is coupled so as to be able to transfer power, and a differential electric motor coupled to the differential mechanism so as to be able to transfer power, the electric transmission mechanism being configured such that a differential state of the differential mechanism is controlled by controlling an operation state of the differential electric motor, wherein
the electric transmission mechanism constitutes a part of the drive device, and an output rotary member of the electric transmission mechanism is disposed coaxially with the differential electric motor,
the transfer device is configured to transfer power from the output rotary member of the electric transmission mechanism to the differential device,
the power control circuit is configured to control power exchanged between the battery and the differential electric motor, and
with the drive device mounted on the electrified vehicle, a rotational axis of the differential electric motor, the rotational axis of the electric motor, the rotational axis of the transfer device, and the rotational axis of the differential device are disposed in parallel with the horizontal direction that is perpendicular to the forward-rearward travel direction, and the respective rotational axes are positioned such that the electric motor, the transfer device, the differential electric motor, and the differential device are arranged in this order from the upper side toward the lower side in the vertical direction and such that the differential electric motor, the transfer device, the differential device, and the electric motor are arranged in this order in the forward-rearward travel direction.

4. The electrified vehicle according to claim 3, **characterized in that** with the power control circuit mounted on the electrified vehicle, the vertically lower portion of the power control circuit is disposed vertically above the differential electric motor.

5. The electrified vehicle according to claim 4, **characterized in that**:
the power control circuit includes a voltage boosting converter and an inverter, the voltage boosting converter being configured to include a reactor and a switching element and boost a voltage of direct current power from the battery, and the inverter being configured to convert the direct current power from the voltage boosting converter into alternating current power and supply the alternating current power to the electric motor; and
the vertically lower portion of the power control circuit includes the reactor.

6. The electrified vehicle according to claim 1 or 2, **characterized by** further comprising:
an engine configured to function as a power source; and
a power supply electric motor coupled to the engine so as to be able to transfer power, wherein
the power supply electric motor is disposed coaxially with the electric motor.

7. The electrified vehicle according to claim 1 or 2, **characterized by** further comprising:
an engine configured to function as a power source; and
a power supply electric motor coupled to the engine so as to be able to transfer power, wherein
the power supply electric motor is disposed on an axis that is different from an axis of the electric motor.
